# EUROPEAN PATENT SPECIFICATION

(11) **EP 2 463 053 B1**
(45) Date of publication and mention of the grant of the patent: **20.11.2013**
(21) Application number: 11191469.3
(22) Date of filing: 01.12.2011
(51) Int. Cl.: B23K 35/02, B23K 35/30, B23K 35/36

(54) **Flux-cored wire for gas shielded arc welding**
Flusskerndraht für gasabgeschirmtes Lichtbogenschweißen
Fil à flux incorporé pour soudure à l'arc sous protection gazeuse

(30) Priority: 08.12.2010 JP 2010273886
(43) Date of publication of application: 13.06.2012
(73) Proprietor: Nippon Steel & Sumikin Welding Co., Ltd., Tokyo 135-0016 (JP)
(72) Inventor: Shimura, Ryuichi, Tokyo 135-0016 (JP); Sasaki, Kiyohito, Tokyo 135-0016 (JP); Toriyabe, Masaaki, Tokyo 135-0016 (JP)
(74) Representative: Klingseisen, Franz

(56) References cited:
- EP-A1- 2 374 571
- CA-A1- 2 435 061
- JP-A- 8 010 982
- JP-A- 9 277 087
- US-A1- 2003 116 550

## Description

### Technical Field

The present invention relates to a flux-cored, wire for gas shielded arc welding that is excellent in welding activity in all position welding at the time of welding steel used for steel structures or the like, and is suitable for providing a weld metal which is excellent in strength and low-temperature toughness as welded (hereinafter called in an AW) and after post weld heat treatment (heat treatment which is performed to soften a heat-affected zone, improve the toughness of a weld zone, and remove weld residual stress: hereinafter called PWHT).

### Background Art

A rutile flux-cored wire and a basic flux-cored wire, for example, are known as a flux-cored wire used in gas shielded arc welding where steel is used as a member to be welded.

Since the rutile flux-cored wire demonstrates exceptionally excellent performance in welding efficiency and welding activity in all position welding, it is adopted in a variety of fields, such as shipbuilding, bridges, marine structures and steel frames. However, rutile as the main material for the rutile flux-cored wire contains Nb and V as impurities which degrade the low-temperature toughness of a weld metal after PWHT Therefore, the rutile flux-cored wire have not been preferably used in welding steel structures according to the PWHT specifications.

On the other hand, the basic flux-cored wire have poorer welding activity in all position welding than the rutile flux-cored wire and have difficulty in achieving practical use while the basic flux-cored wires have a smaller amount of oxygen in a weld metal and thus provide the weld metal of low-temperature toughness excellent both in an AW and after PWHT.

In this respect, techniques of acquiring the weld metal excellent in low-temperature toughness after PWHT even when the rutile flux-cored wire are used have been studied. JP-A-8-99193 (Patent Document 1), for example, discloses a technique of acquiring the weld metal excellent in low-temperature toughness after PWHT by using titanium oxide which contains very small amounts of Nb and V as impurities instead of rutile. However, this technique brings about a problem such that the strength of the weld metal after PWHT drops significantly as compared with that in an AW.

JP-A-8-10982 (Patent Document 2) and JP-A-9-277087 (Patent Document 3) disclose techniques of acquiring the weld metal excellent in low-temperature toughness after PWHT by restricting Nb and V contents in the entire wire. Like the technique disclosed in Patent Document 1, however, those techniques bring about a problem such that the strength of the weld metal after PWHT drops significantly as compared with that in an AW.
[Patent Document 1] JP-A-8-99193
[Patent Document 2] JP-A-8-10982
[Patent Document 3] JP-A-9-277087

Canadian document( CA 2435061) discloses a flux-cored wire for gas shielded arc welding, having a flux filled in a steel skin and containing, in terms of mass % to a total mass of wire, 0.02 to 0.08 % of C, 0.1 to 1.0 % of Si, 1.0 to 2.5 % of Mn, 0.1 to 3.0 % of Ni, 0.002 to 0.015 % of B, 0.1 to 0.8 % of Mg, 3.0 to 8.0 % of a total of TiO2 converted value of Ti oxide and metal, 0.1 to 1.2 % of a total Al2O3 converted value of Al oxide and metal Al, 0.1 to 1.0 % of a total of SiO2 converted value of Si oxide, 0.01 to 0.030 of a total F converted value of metal fluoride, 0.02 % or less of P and Fe component in iron alloy powder, an arc stabilizer and unavoidable impurities, where (Mn %) indicates a Mn content in terms of mass % to a total mass of the wire.

### Summary of the Invention

Accordingly, the invention has been made in consideration of the foregoing problems, and it is an object of the present invention to provide a flux-cored wire for gas shielded arc welding that provides excellent welding activity in all position welding at the time of welding steel used for steel structures or the like, and provides a weld metal which is excellent in strength and low-temperature toughness in an AW and after PWHT, and can suppress the strength of the weld metal after PWHT from becoming significantly lower than that in an AW. Means for Solving the Problems

A subject matter of the invention is a flux-cored wire for gas shielded arc welding, having a flux filled in a steel skin and containing, in terms of mass% to a total mass of the wire, 0.02 to 0.08% of C, 0.1 to 1.0% of Si, 1.0 to 2.5% of Mn, 0.1 to 3.0% of Ni, 0.002 to 0 015% of B, 0 1 to 0.8% of Mg, 0 021 to (0.055-0.01x[Mn%])% of V, 3.0 to 8.0% of a total TiO₂ converted value of Ti oxide and metal Ti, 0.1 to 1.2% of a total Al₂O₃ converted value of Al oxide and metal Al, 0 1 to 1.0% of a total SiO₂ converted value of Si oxide, 0 01 to 0.30% of a total F converted value of metal fluoride, 0.02% or less of P, and 0.015% or less of Nb, a remainder containing Fe of the steel skin, iron powder, a Fe component in iron alloy powder, an arc stabilizer and unavoidable impurities, where [Mn%] indicates a Mn content in terms of mass% to a total mass of the wire.

It is preferable that the flux-cored wire may further contain 0.1 to 0.8% of a total ZrO₂ converted value of Zr oxide and metal Zr in terms of mass% to a total mass of the wire.

Further, it is preferable that the flux-cored wire may further contain 0.02 to 0.30% of Mo in terms of mass% to a total mass of the wire.

### Effect of the Invention

The flux-cored wire for gas shielded arc welding according to the invention stably provides excellent welding activity in all position welding, and provides a weld metal which is excellent in strength and low-temperature toughness in an AW and after PWHT, and can suppress the strength of the weld metal after PWHT from becoming significantly lower than that in an AW. In addition, this makes it possible to improve the quality of a weld zone.

### Mode for Carrying Out the Invention

The present inventors have made various studies on the wire component compositions for a flux-cored wire for rutile gas shielded arc welding which provides excellent welding activity in all position welding, and provides a weld metal which is extremely excellent in strength and low-temperature toughness in an AW and after PWHT, and can suppress the strength of the weld metal after PWHT from becoming significantly lower than that in an AW.

As a result, it was found that it is possible to suppress the strength of the weld metal after PWHT from becoming significantly lower than that in an AW especially by setting the proper V content And furthermore, it was found that it is possible to ensure excellent welding activity in all position welding and stably provide the weld metal excellent in low-temperature toughness in an AW and after PWHT by setting the proper amounts of Si, Mn, Ni, B, Ti, Al and Nb as alloy components, Mg as a deoxidizer, Ti oxide, Al oxide and Si oxide as oxides, and metal fluoride as an arc stabilizer.

The following will describe the components of a flux-cored wire for gas shielded arc welding according to the invention, and the reasons for limiting the compositions. First, the fundamental components of the flux-cored wire for gas shielded arc welding according to the invention will be described. The composition of each component is expressed in terms of mass% to the total mass of the wire, and is expressed merely by % described when representing its mass%

[C: 0 02 to 0.08%]
C has an effect of contributing to stabilization of an arc at the time of welding. When the C content is less than 0.02%, however, this effect is not provided sufficiently. When the C content is larger than 0.08%, C excessively stays in the weld metal, reducing the low-temperature toughness of the weld metal in an AW and after PWHT. Accordingly, the C content is set to 0.02 to 0.08%.

C is added from a steel skin, or metal powder, alloy powder or the like in the flux.

[Si: 0.1 to 1.0%]
Si partly becomes a weld slag at the time of welding to provide a weld bead with a favorable appearance and shape, thus contributing to improvement on welding activity When the Si content is less than 0.1%, however, this effect of providing the weld bead with a favorable appearance and shape is not obtained sufficiently. When the Si content is larger than 1.0%, Si excessively stays in the weld metal, reducing the low-temperature toughness of the weld metal in an AW and after PWHT. Accordingly, the Si content is set to 0.1 to 1.0%.

Si is added from a steel skin, or metal Si or Si alloys, such as Fe-Si, Fe-Si-Mn or the like in the flux.

[Mn: 1.0 to 2.5%]
Like Si, Mn partly becomes a weld slag at the time of welding to provide a weld bead with a favorable appearance and shape, thus contributing to improvement on welding activity. In addition, Mn has an effect such that Mn stays in the weld metal, increasing the strength and low-temperature toughness of the weld metal in an AW and after PWHT. When the Mn content is less than 1.0%, however, those effects are not provided sufficiently. When the Mn content is larger than 2.5%, Mn excessively stays in the weld metal, making the weld metal excessively strong, thereby rather reducing the low-temperature toughness of the weld metal in an AW and after PWHT. Accordingly, the Mn content is set to 1.0 to 2.5%.

Mn is added from a steel skin, or Mn alloys, such as Fe-Mn, Fe-Si-Mn or the like in the flux.

[Ni: 0.1 to 3.0%]
Ni has an effect of improving the low-temperature toughness of the weld metal in an AW and after PWHT. When the Ni content is less than 0.1%, however, this effect is not provided sufficiently. When the Ni content is larger than 3.0%, it reduces the low-temperature toughness of the weld metal after PWHT. And furthermore, when the Ni content is larger than 3.0%, high-temperature cracking is likely to occur in the weld metal, making it difficult to provide a weld bead with a favorable appearance and shape, thereby lowering the welding activity. Accordingly, the Ni content is set to 0.1 to 3.0%.

Ni is added from metal Ni or Ni alloys, such as Fe-Ni or the like in the flux

[B: 0.002 to 0.015%]
B has an effect of making the microstructure of the weld metal finer when a minute amount of B is added, thereby improving the low-temperature toughness of the weld metal in an AW and after PWHT. When the B content is less than 0.002%, however, this effect is not provided sufficiently. When the B content is larger than 0.015%, the weld metal becomes excessively hardened, thereby reducing the low-temperature toughness of the weld metal in an AW and after PWHT. And furthermore, when the B content is larger than 0.015%, high-temperature cracking is likely to occur in the weld metal, making it difficult to provide a weld bead with a favorable appearance and shape, thereby lowering the welding activity. Accordingly, the B content is set to 0.002 to 0.015%

B is added from metal B or B alloys, such as Fe-B, Mn-B or the like in the flux..

[Mg: 0.1 to 0.8%]
Mg has an effect of serving as a strong deoxidizer to reduce oxygen in the weld metal, thereby increasing the low-temperature toughness of the weld metal in an AW and after PWHT. When the Mg content is less than 0.1%, however, this effect is not provided sufficiently. When the Mg content is larger than 0.8%, it intensely reacts with oxygen in an arc at the time of welding to increase the amount of spatter or fumes, thereby lowering the welding activity. Accordingly, the Mg content is set to 0.1 to 0.8%.

Mg is added from metal Mg or Mg alloys, such as Al-Mg or the like in the flux.

[V: 0 021 to (0.055-0.01x[Mn%])%]
While limiting the content of V improves the low-temperature toughness of the weld metal after PWHT, if the V content is too small, it excessively reduces the strength of the weld metal after PWHT as compared with that in an AW. When the V content is equal to or lager than 0.021.%, it is possible to sufficiently restrain the strength of the weld metal after PWHT from being reduced excessively as compared with that in an AW. In addition, reduction in the low-temperature toughness of the weld metal after PWHT is aggravated by the combined addition of V and Mn, so that the V content should not exceed the value that is obtained from a relational equation (0.055-0.01x[Mn%])% between V and Mn. Accordingly, the V content is set to 0.021 to (0.055-0.01x[Mn%])% where [Mn%] indicates a Mn content in terms of mass% to the total mass of the wire.

V is essentially added from Ti oxides, such as rutile, titanium slag, ilmenite or the like in the flux, but may be added from V alloys such as Fe-V or the like to adjust the V content.

[Total TiO₂ converted value of Ti oxide and metal Ti: 3.0 to 8.0%]
Ti oxide and metal Ti have an effect such that they contribute to stabilization of an arc at the time of welding, and become a weld slag at the time of welding to provide a weld bead with a favorable shape, thus contributing to improvement on the welding activity. Ti oxide and metal Ti also have an effect such that the Ti oxide and metal Ti when partly staying in the weld metal as an Ti oxide to make the microstructure of the weld metal finer, thereby increasing the low-temperature toughness of the weld metal after PWHT In addition, Ti oxide and metal Ti have an effect such that when included as Ti oxide in the weld slag in vertical upward welding, the Ti oxide and metal Ti serve to adjust the viscosity and melting point of the weld slag to prevent molten metal from dropping. When the total TiO₂ converted value of Ti oxide and metal Ti is less than 3.0%, however, those effects are not provided sufficiently, making an arc at the time of welding unstable, making the appearance and shape of the weld bead poor by increase in spatter, and reducing the low-temperature toughness of the weld metal after PWHT When the total TiO₂ converted value is less than 3.0%, molten metal drops in vertical upward welding, making it difficult to continue welding. When the total TiO₂ equivalent exceeds 8.0%, an arc at the time of welding becomes stable to reduce the amount of spatter, but an excessive residue of a Ti oxide in the weld metal reduces the low-temperature toughness of the weld metal in an AW and after PWHT. Accordingly, the total TiO₂ converted value of the Ti oxide and metal Ti is set to 3.0 to 8.0%.

Ti oxide is added from rutile, titanium oxide, titanium slag, ilmenite or the like in the flux And metal Ti is added from a steel skin, or metal Ti or Ti alloys, such as Fe-Ti or the like in the flux.

[Total Al₂O₃ converted value of Al oxide and metal Al: 0.1 to 1.2%]
Al oxide and metal Al have an effect such that when included as Al oxide in the weld slag at the time of welding, the Al oxide and metal Al serve to adjust the viscosity and melting point of the weld slag to prevent molten metal from dropping especially in vertical upward welding. When the total Al₂O₃ converted value of Al oxide and metal Al is less than 0.1%, however, this effect is not provided sufficiently. When the total Al₂O₃ converted value is larger than 1.2%, Al excessively remains in the weld metal, reducing the low-temperature toughness of the weld metal in an AW and after PWHT. Accordingly, the total Al₂O₃ converted value of the Al oxide and metal Al is set to 0.1 to 1.2%.

Al oxide is added from alumina or the like in the flux. Metal Al is added from metal Al or Al alloys, such as Fe-Al, Al-Mg or the like in the flux.

[Total SiO₂ converted value of Si oxide: 0.1 to 1.0%]
Si oxide has an effect of adjusting the viscosity and melting point of the weld slag to improve the slag covering When the total SiO₂ converted value of Si oxide is less than 0.1%, however, this effect is not provided sufficiently. When the total SiO₂ converted value of Si oxide is larger than 1.0%, the basicity of the weld slag decreased, increasing the amount of oxygen in the weld metal, thereby reducing the low-temperature toughness of the weld metal in an AW and after PWHT. Accordingly, the total SiO₂ converted value of Si oxide is set to 0.1 to 1.0%.

Si oxide is added from silica sand, zircon sand, sodium silicate or the like in the flux.

[Total F converted value of metal fluoride: 0.01 to 0.30%]
Metal fluoride has an effect of contributing to stabilization of an arc at the time of welding. When the total F converted value of metal fluoride is less than 0.01%, however, this effect is not provided sufficiently. When the total F converted value of metal fluoride is larger than 0.30%, an arc at the time of welding becomes unstable, producing a lot of spatter. Further, it is likely that molten metal drops in vertical upward welding. Accordingly, the total F converted value of metal fluoride is set to 0.01 to 0.30%.

Metal fluorides include CaF₂, NaF, KF, LiF, MgF₂, K₂SiF₆, AlF₃ or the like. The total F converted value of metal fluoride means the ratio of the total amount of F contained in those metal fluorides in terms of mass% to the total mass of the wire.

[P: 0.02% or less]
P is an element which reduces the low-temperature toughness of the weld metal in an AW and after PWHT. When the P content is equal to or less than 0.02%, however, this range is allowable with respect to the low-temperature toughness of the weld metal in an AW and after PWHT. Accordingly, the P content is set to 0.02% or less.

[Nb: 0.015% or less]
Nb is an element which forms Nb carbide or Nb nitride in the weld metal through the PWHT to reduce the low-temperature toughness of the weld metal after PWHT. However, when the Nb content is equal to or less than 0.015%, this range is allowable with respect to the low-temperature toughness of the weld metal after PWHT. Accordingly, the Nb content is set to 0.015% or less.

Nb is essentially added from Ti oxides, such as rutile, titanium slag, ilmenite or the like in the flux, so that strict selection is made from those oxides so as to obtain various components within the ranges that have been specified in the present invention.

The foregoing is the description of the fundamental components of the flux-cored wire for gas shielded arc welding according to the present invention, but as will be described below, the flux-cored wire for gas shielded arc welding according to the invention may contain Zr oxide and metal Zr, Mo as needed.

[Total ZrO₂ converted value of Zr oxide and metal Zr: 0.1 to 0.8%]
Like Al oxide and metal Al, Zr oxide and metal Zr have an effect such that when included as Zr oxide in the weld slag at the time of welding, the Zr oxide and metal Zr serve to adjust the viscosity and melting point of the weld slag to prevent molten metal from dropping especially in vertical upward welding. When the total ZrO₂ converted value of Zr oxide and metal Zr is less than 0.1%, however, this effect is not provided sufficiently. When the total ZrO₂ equivalent is larger than 0.8%, the slag removability is lowered. Accordingly, the total ZrO₂ converted value of Zr oxide and metal Zr when contained is set to 0.1 to 0.8%.

Zr oxide is added from zircon sand, zirconium oxide or the like in the flux. Metal Zr is added from a steel skin, or metal Zr or Zr alloys, such as Fe-Zr or the like

[Mo: 0.02 to 0.30%]
Mo has an effect of increasing the strength of the weld metal in an AW and after PWHT. When the Mo content is less than 0.02%, however, this effect is not provided sufficiently When the Mo content is larger than 0.30%, the strength of the weld metal becomes too much higher, thereby reducing the low-temperature toughness of the weld metal in an AW and after PWHT. Accordingly, when the MO is contained, its content is set to 0.02 to 0.30%.

Mo is added from metal Mo or Mo alloys, such as Fe-Mo or the like in the flux.

The flux-cored wire for gas shielded arc welding according to the invention is structured to have a steel skin formed into a pipe in which a flux is filled. The types of wire are classified into a wire having a steel skin without a joint obtained by welding juncture of a steel skin formed pipe-shaped, and a wire having a steel skin with a joint obtained by not welding juncture of steel skin formed pipe-shaped. According to the invention, a wire with either cross-sectional structure may be adopted. It is to be noted however that regarding the wire having a steel skin without a joint, a heat treatment at 500 to 1000°C can be performed for the purpose of reducing the amount of moisture in the wire, and the flux after fabrication is free from moisture absorption, so that the amount of diffusible hydrogen in the weld metal can be reduced to improve resistance to low-temperature cracking. It is therefore desirable to use a wire having a steel skin without a joint.

The remainder of the flux-cored wire for gas shielded arc welding according to the invention contains Fe of the steel skin, iron powder to be added for adjusting the component, an Fe component in iron alloy powders such as Fe-Mn, Fe-Si or the like, an arc stabilizer and an unavoidable impurities Examples of the arc stabilizer include alkali metal oxides such as Na₂O, K₂O, Li₂O or the like Further, it is preferable that the flux filling ratio, which is not particularly restrictive, be 8 to 20% to the total mass of the wire from the viewpoint of productivity.

### Example 1

The following will specifically describe the effects of the invention by way of Example 1. First, SPCC described in JIS G 3141 was used as a steel skin to form flux-cored wires with various component compositions given in the following Table 1 The wire diameter of the flux-cored wires was set to 1.2 mm.

Table 1

Then, welding activity in vertical upward welding was evaluated using the flux-cored wires shown in Table 1 under the welding conditions shown in Table 2 with a steel plate with a thickness of 12 mm (SM490A described in JIS G 3106 as a material) used as a test sample for T-joint fillet welding. In addition to the evaluation, a deposited metal test was conducted in conformity with JIS Z 3111 under the welding conditions shown in Table 2 with a steel plate with a thickness of 20 mm (SLA325A described in JIS G 3126 as a material) used as a test sample.

Table 2

Evaluation on welding activity in vertical upward welding was carried out by studying the stability of an arc, the state of occurrence of spatter, the state of occurrence of fumes, the shape of bead, the appearance of bead and dropping of molten metal when semiautomatic MAG welding was performed.

In the deposited metal test, the deposited metal in an AW and the deposited metal after PWHT both obtained after the above welding conditions were evaluation targets. PWHT was performed under the condition of 620°C and four hours. In the deposited metal test, samples for a tension test and impact test (in conformity with JIS Z 3111) were extracted from the center portion of the deposited metal in the thickness direction of the plate, and used in the individual tests. The evaluation on the mechanical properties in the deposited metal test was such that those of the deposited metals in an Aw and after PWHT having absorbed energy of 50 J or higher at -50°C, both tensile strength in the AW (hereinafter called TSA) and tensile strength after PWHT (hereinafter called TSP) of 500 MPa or higher and a difference therebetween (ΔTS=TSA-TSP: hereinafter called Δ TS) of -30 to 30 MPa were regarded as passed Those results are collected in Table 3.

Table 3

In Table 1, components whose wire compositions were out of the ranges specified in the invention were underlined. In Table 3, the mechanical properties which were out of the range specified above were underlined.

Wire symbols 1 to 17 in Table 1 and Table 3 are invention examples, and wire symbols 18 to 32 are comparative examples The compositions of the individual components represented by the wire symbols 1 to 17 as the invention examples were within the ranges specified in the invention, and showed very satisfactory results such that the welding activity was good, and the TSA, TSP, ΔTS, and the absorbed energies in an AW and after PWHT showed good values. Note that with regard to the wire symbols 3, 7, 10, 11, 13 and 17 where the ZrO₂ converted values of Zr oxide and metal Zr were smaller than the range specified in the invention, slight metal dropping occurred in vertical upward welding.

Regarding the wire symbol 18 in the comparative examples, C was less than the range specified in the invention, so that an arc was unstable. In addition, since the total TiO₂ converted value of Ti oxide and metal Ti was larger than the range specified in the invention, the absorbed energies in an AW and after PWHT had low values.

Regarding the wire symbol 19, C was larger than the range specified in the invention, so that the absorbed energies in an AW and after PWHT had low values In addition, since the total ZrO₂ converted value of Zr oxide and metal Zr was larger than the range specified in the invention, the slag removability was poor

Regarding the wire symbol 20, Si was less than the range specified in the invention, so that the appearance and shape of weld bead were not good In addition, since the total Al₂O₃ converted value of Al oxide and metal Al was larger than the range specified in the invention, the absorbed energies in an AW and after PWHT had low values

Regarding the wire symbol 21, Si was larger than the range specified in the invention, so that the absorbed energies in an AW and after PWHT had low values. In addition, since the total ZrO₂ converted value of Zr oxide and metal Zr was less than the range specified in the invention, slight dropping of molten metal occurred.

Regarding the wire symbol 22, Mn was less than the range specified in the invention, so that the appearance and shape of weld bead were not good, the TSA and TSP were low, and absorbed energies in an AW and after PWHT were low too. In addition, since the total ZrO₂ converted value of Zr oxide and metal Zr was less than the range specified in the invention, slight dropping of molten metal occurred.

Regarding the wire symbol 23, Mn was larger than the range specified in the invention, so that the TSA and TSP became excessively high, making the values of the absorbed energies in an AW and after PWHT low. In addition, since the total F converted value of metal fluoride was larger than the range specified in the invention, an arc was unstable, a lot of spatter occurred, and dropping of molten metal occurred

Regarding the wire symbol 24, Ni was less than the range specified in the invention, so that the absorbed energies in an AW and after PWHT had low values. In addition, since the total F converted value of metal fluoride was less than the range specified in the invention, an arc was unstable.

Regarding the wire symbol 25, Ni was larger than the range specified in the invention, so that the crater crack occurred, and the absorbed energy after PWHT had a low value. In addition, since the total F converted value of metal fluoride was larger than the range specified in the invention, an arc was unstable and a lot of spatter occurred, causing molten metal to drop.

Regarding the wire symbol 26, B was less than the range specified in the invention, so that the absorbed energies in an AW and after PWHT had low values. In addition, since the total Al₂O₃ converted value of Al oxide and metal Al was less than the range specified in the invention, dropping of molten metal occurred.

Regarding the wire symbol 27, B was larger than the range specified in the invention, so that the crater crack occurred, and the absorbed energies in an Aw and after PWHT had low values.. In addition, since the total SiO₂ converted value of Si oxide was less than the range specified in the invention, slag covering was not good.

Regarding the wire symbol 28, Mg was less than the range specified in the invention, so that the absorbed energies in an Aw and after PWHT had low values. In addition, since the total F converted value of metal fluoride was less than the range specified in the invention, an arc was unstable.

Regarding the wire symbol 29, Mg was larger than the range specified in the invention, so that a lot of spatter and fumes occurred. In addition, since P was larger than the range specified in the invention, the absorbed energies in an AW and after PWHT had low values.

Regarding the wire symbol 30, V was less than the range specified in the invention, so that the TSP became too lower than the TSA, resulting in a high ΔTS. In addition, since the total SiO₂ converted value of Si oxide was larger than the range specified in the invention, absorbed energies in an AW and after PWHT had low values. Further, since the total ZrO₂ converted value of Zr oxide and metal Zr was less than the range specified in the invention, slight dropping of molten metal occurred.

Regarding the wire symbol 31, the amount of V exceeded one specified by the relational equation (0.07-0.02x[Mn%]) between V and Mn, and V was larger than the range specified in the invention, so that the absorbed energy after PWHT had a low value. Further, since the ZrO₂ converted value of Zr oxide and metal Zr was less than the range specified in the invention, slight dropping of molten metal occurred.

Regarding the wire symbol 32, the total TiO₂ converted value of Ti oxide and metal Ti was less than the range specified in the invention, so that an arc was unstable, a lot of spatter occurred, the shape of weld bead was poor, and further dropping of molten metal occurred. In addition, since Nb was larger than the range specified in the invention, the absorbed energy after PWHT had a low value.

### Example 2

The following will specifically describe the effects of the invention by way of Example 2. The description of Example 2 covers only those portions which concern conditions different from those of Example 1. In Example 2, samples of flux-cored wires with various component compositions given in the following Table 4 were formed.

Table 4

Then, evaluation on welding activity in vertical upward welding and a deposited metal test were conducted using the flux-cored wires shown in Table 4 under the same conditions as those for Example 1.

The evaluation on the mechanical properties in the deposited metal test was such that those of the deposited metals in an AW and after PWHT having absorbed energy of 50 J or higher at -50°C, a TSA and TSP both of 570 MPa or higher and ΔTS of -30 to 30 MPa were regarded as passed. Those results are collected in Table 5.

Table 5

In Table 4, components whose wire compositions were out of the ranges specified in the invention were underlined. In Table 5, the mechanical properties which were out of the range specified above were underlined.

Wire symbols 33 to 35 in Table 4 and Table 5 are invention examples, and wire symbols 36 and 37 are comparative examples. The compositions of the individual components represented by the wire symbol 33 to 35 as the invention examples were within the ranges specified in the invention, and showed very satisfactory results such that the TSA, TSP, ΔTS, and the absorbed energies in an AW and after PWHT showed good values

Regarding the wire symbol 36, Mo was less than the range specified in the invention, so that the TSA and TSP had low values.

Regarding the wire symbol 37, Mo was larger than the range specified in the invention, so that the TSA and TSP became higher, causing the absorbed energies in an AW and after PWHT to have low values.

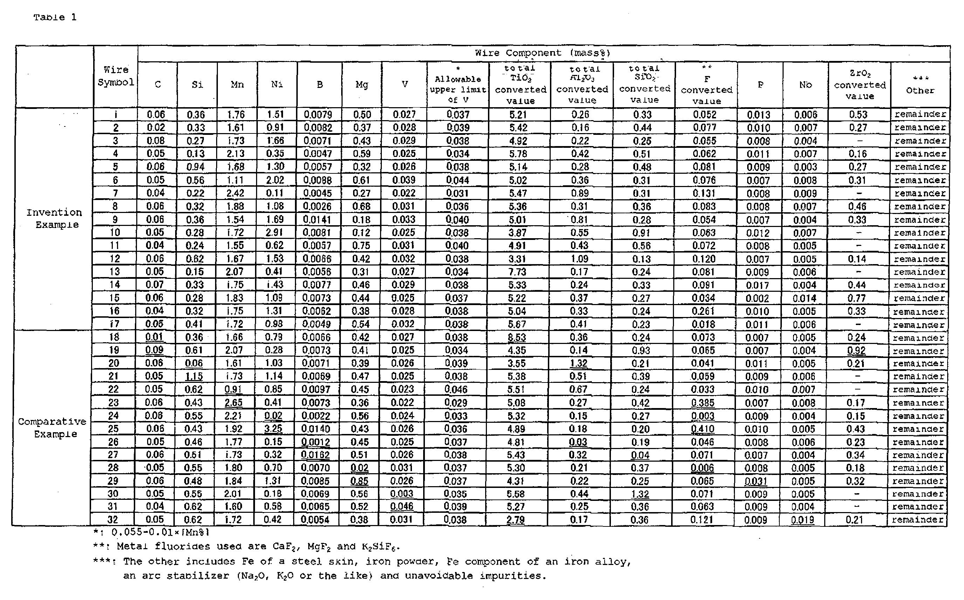

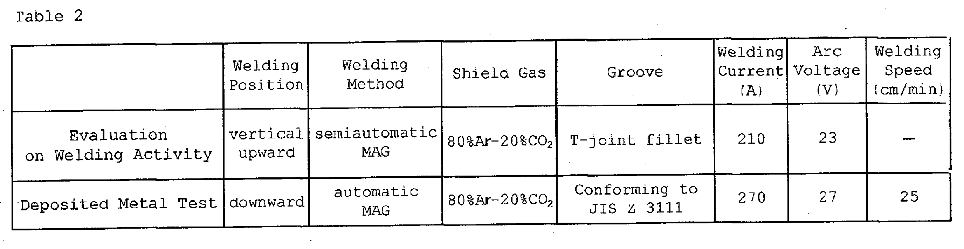

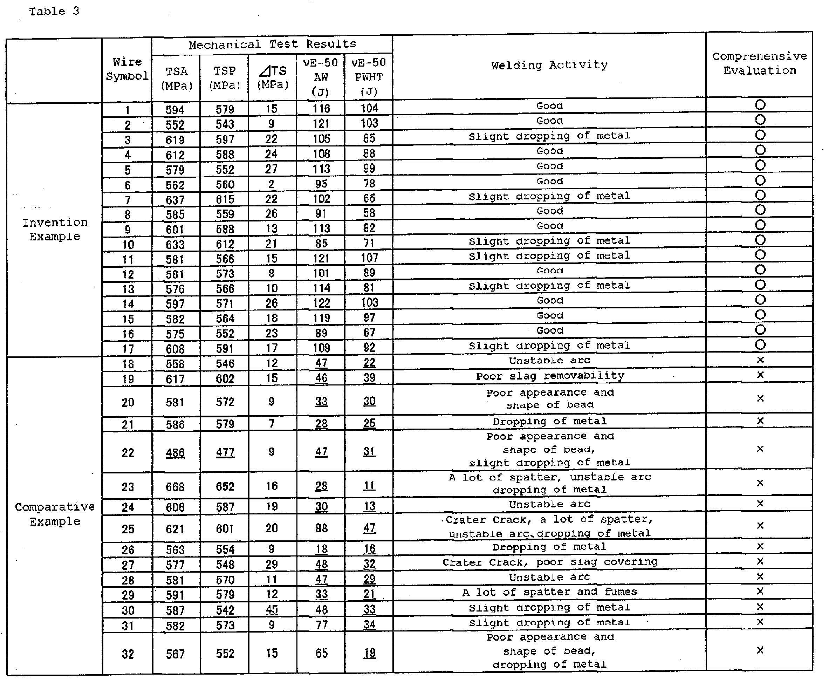

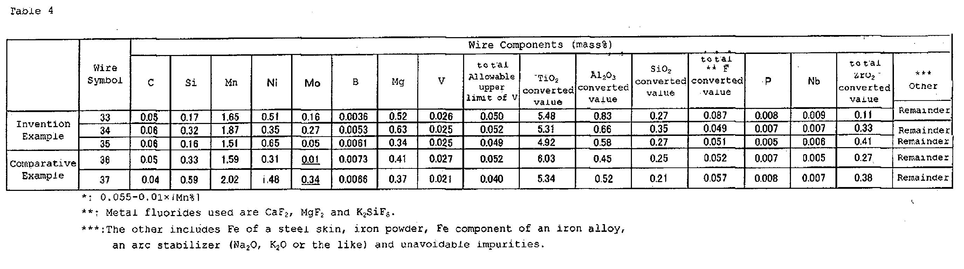

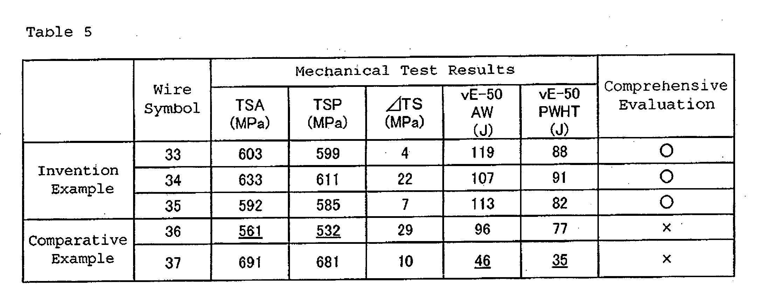

## Claims

1. A flux-cored wire for gas shielded arc welding, having a flux filled in a steel skin and containing, in terms of mass% to a total mass of the wire, 0 02 to 0.08% of C, 0.1 to 1.0% of Si, 1 0 to 2.5% of Mn, 0 1 to 3.0% of Ni, 0 002 to 0 015% of B, 0.1 to 0.8% of Mg, 0 021 to (0 055-0.01x[Mn%])% of V, 3 0 to 8 0% of a total TiO₂ converted value of Ti oxide and metal Ti, 0.1 to 1.2% of a total Al₂O₃ converted value of Al oxide and metal Al, 0.1 to 1 0% of a total SiO₂ converted value of Si oxide, 0 01 to 0.30% of a total F converted value of metal fluoride., 0.02% or less of P, and 0 015% or less of Nb, a remainder containing Fe of the steel skin, iron powder, a Fe component in iron alloy powder, an are stabilizer and unavoidable impurities,
where [Mn%] indicates a Mn content in terms of mass% to a total mass of the wire.

2. The flux-cored wire according to claim 1, further containing 0.1 to 0.8% of a total ZrO₂ converted value of Zr oxide and metal Zr in terms of mass% to a total mass of the wire.

3. The flux-cored wire according to claim 1 or 2, further containing 0 02 to 0 30% of Mo in terms of mass% to a total mass of the wire.

## Patentansprüche

1. Flusskerndraht für gasabgeschirmtes Lichtbogenschweißen, aufweisend ein Flussmittel, welches in eine Stahlhaut gefüllt ist und enthaltend, hinsichtlich Massenprozent zu einer Gesamtmasse des Drahts, 0,02 bis 0,08 % von C, 0,1 bis 1,0 % von Si, 1,0 bis 2,5 % von Mn, 0,1 bis 3,0 % von Ni, 0,002 bis 0,015 % von B, 0,1 bis 0,8 % von Mg, 0,021 bis (0,055 - 0,01 x [Mn%]) % von V, 3,0 bis 8,0 % eines Gesamt-TiO₂ umgewandelten Wertes von Ti-Oxid und Metall Ti, 0,1 bis 1,2 % eines Gesamt-Al₂O₃ umgewandelten Wertes von Al-Oxid und Metall Al, 0,1 bis 1,0 % eines Gesamt-SiO₂ umgewandelten Wertes eines Si-Oxids, 0,01 bis 3,0 % eines Gesamt-F umgewandelten Wertes eines Metall-Fluorids, 0,02 % oder weniger von P, und 0,015 % oder weniger von Nb, ein Rest enthaltend Fe der Stahlhaut, Eisenpulver, eine Fe-Komponente in Eisen-Legierungspulver, einen Bogenstabilisator und unvermeidliche Verunreinigungen;
wobei [Mn%] einen Mn-Anteil hinsichtlich Massenprozent zu einer Gesamtmasse des Drahts bezeichnet

2. Flusskerndraht nach Anspruch 1, ferner enthaltend 0,1 bis 0,8 % eines Gesamt-ZrO₂ umgewandelten Wertes von Zr-Oxid und Metall Zr hinsichtlich Massenprozent einer Gesamtmasse des Drahtes

3. Flusskerndraht nach Anspruch 1 oder 2, ferner enthaltend 0,02 bis 0,30 % von Mo hinsichtlich Massenprozent zu einer Gesamtmasse des Drahtes.

## Revendications

1. Fil à flux incorporé pour soudure à l'arc sous protection gazeuse, comprenant un flux remplit dans une peau d'acier et contenant, en termes de pourcentage massique à une masse totale du fil, de 0.02 à 0 08% de C, de 0.1 à 1.0% de Si, de 1.0 à 2.5% de Mn, de 0.1 à 3.0% de Ni, de 0 002 à 0.015% de B, de 0 1 à 0.8% de Mg, de 0 021 à (0 055-0 01x[Mn%])% de V, de 3.0 à 8.0% d'une valeur totale convertie de Ti0₂ d'oxyde de Ti et de métal de Ti, de 0 1 à 1.2% d'une valeur totale convertie de Al₂0₃ d'oxyde d'Al et de métal d'Al, de 0.1 à 1 0% d'une valeur totale convertie de Si0₂ d'oxyde de Si, de 0,01 à 0.30% d'une valeur totale convertie de F de fluorure de métal, de 0.02% ou moins de P, et de 0.015% ou moins de Nb, un résidu contenant de Fe de la peau d'acier, de poudre de fer, un composant de Fe en poudre d'alliage de fer, un stabilisateur d'arc et des impuretés inévitables;
dans lequel [Mn%] indique un contenu de Mn en termes de pourcentage massique à une masse totale du fil

2. Le fil à flux selon la revendication 1, comprenant en outre de 0.1 à 0.8% d'une valeur totale convertie de ZrO₂ d'oxyde de Zr et de métal de Zr en termes de pourcentage massique à une masse totale du fil.

3. Le fil à flux selon la revendication 1 ou 2, comprenant en outre de 0.02 à 0.30% de Mo en termes de pourcentage massique à une masse totale du fil.
